# EUROPEAN PATENT APPLICATION

(11) **EP 3 170 851 A1**
(43) Date of publication of application: **24.05.2017**
(21) Application number: 15822258.8
(22) Date of filing: 08.07.2015
(51) Int. Cl.: C08G 63/672, C08G 63/78

(54) **METHOD FOR PRODUCING POLYESTER RESIN**

(30) Priority: 18.07.2014 JP 2014147701
(71) Applicant: Mitsubishi Gas Chemical Company, Inc., Tokyo 100-8324 (JP)
(72) Inventor: OCHI, Noriaki, Hiratsuka-shi Kanagawa 254-0016 (JP); HIROKANE, Takeshi, Hiratsuka-shi Kanagawa 254-0016 (JP)
(74) Representative: Vossius & Partner Patentanwälte Rechtsanwälte mbB
(86) International application number: PCT/JP2015/069631
(87) International publication number: WO 2016/009914

(57) **Abstract**

The method for producing a polyester resin according to the present invention is a method for producing a polyester resin that contains a dicarboxylic acid structural unit and a diol structural unit, the diol structural unit containing a diol structural unit having a cyclic acetal skeleton, wherein the method contains a step of mixing and reacting an ester compound (A) having a cyclic acetal skeleton and an ester compound (B) having no cyclic acetal skeleton, and the method satisfies the following conditions (1) and (2):
(1) the ester compound (A) contains a dicarboxylic acid structural unit and a diol structural unit, the diol structural unit containing a diol structural unit having a cyclic acetal skeleton, and has an intrinsic viscosity of 0.1 to 1.5 dl/g as measured at 25°C in a mixed solution of phenol and 1,1,2,2-tetrachloroethane having a mass ratio of 6 : 4; and
(2) the ester compound (B) comprises a dicarboxylic acid structural unit having no cyclic acetal skeleton and a diol structural unit having no cyclic acetal skeleton, and has an acid value of 1 micro equivalent/g or higher and lower than 150 micro equivalents/g.

## Description

### Technical Field

The present invention relates to a method for producing a polyester resin comprising a dicarboxylic acid structural unit and a diol structural unit, the diol structural unit comprising a diol structural unit having a cyclic acetal skeleton.

### Background Art

Polyester resins containing a diol having a cyclic acetal skeleton as its structural unit are known to be improved in the heat resistance, the adhesivity, the flame retardancy and the like derived from the rigid skeleton of the cyclic acetal and the acetal bond. For example, Patent Literature 1 describes that a PET modified with 3,9-bis(1,1-dimethyl-2-hydroxyethyl)-2,4,8,10-tetraoxaspiro[5.5]undecane (hereinafter, referred to as "SPG" in some cases) is high in the glass transition temperature and excellent in the heat resistance.

Further, Patent Literature 2 describes a polyester resin containing SPG as a copolymerization component and being high in the glass transition temperature and excellent in the transparency and the mechanical property. Furthermore, Patent Literatures 3 and 4 describe methods for producing polyester resins containing SPG as a copolymerization component.

As described in Patent Literature 4, since a cyclic acetal skeleton of a diol having the cyclic acetal skeleton is liable to be degraded by an acid, there are cases where a polyester resin obtained by a usual direct esterification method using a dicarboxylic acid as a raw material has a remarkably broad molecular weight distribution or assumes a gel state. Hence, as methods for producing polyester resins having a diol having a cyclic acetal skeleton as their structural unit, there are disclosed transesterification methods using an esterified dicarboxylic acid, described in Patent Literature 3, Patent Literature 5 and the like, and peculiar transesterification methods using a low-acid value polyester or its oligomer as an ester, described in Patent Literature 4 and the like.

Further, Patent Literature 6 discloses a method for producing a polyester resin for a powder coating material, the method using as raw materials an ester compound having a cyclic acetal skeleton, a dicarboxylic acid, and a diol having no cyclic acetal skeleton.

### Citation List

### Patent Literature

Patent Literature 1: U.S. Patent No. 2,945,008
Patent Literature 2: Japanese Patent Laid-Open No. 2002-69165
Patent Literature 3: Japanese Patent Laid-Open No. 2003-212981
Patent Literature 4: Japanese Patent Laid-Open No. 2004-137477
Patent Literature 5: Japanese Patent Laid-Open No. 2008-169260
Patent Literature 6: Japanese Patent Laid-Open No. 2009-120765

### Summary of Invention

### Technical Problem

Patent Literature 3 and Patent Literature 5, however, pose a problem on production with the sublimation of a diol in the case of using the sublimable diol as a raw material, to resultantly make the process complicated.

Further, in the methods described in Patent Literature 4 and the like, since a low-acid value polyester resin or its oligomer needs to be used as an ester, and in order to produce these, the molar ratio of a diol structural unit to a dicarboxylic acid structural unit in the ester production needs to be made high, there arise a problem that the amount of ethers formed in the dehydration reaction of diols in the ester compound increases and a problem that the utilization efficiency of the reactor is poor. Furthermore, the esterification reaction needs to be sufficiently carried out to then pose a problem that the ester production time becomes long.

In addition, a polyester resin obtained by the production method described in Patent Literature 6 is high in the terminal acid value, low in the intrinsic viscosity and insufficient in the macromolecularization to then pose problems with the moldability and the mechanical performance.

Moreover, in the case of a polyester resin having a relatively low proportion of a diol structural unit having a cyclic acetal skeleton, since the half-crystallization time is relatively short, there arise such problems that the transparency decreases in the case of obtaining thick molded articles, and the polyester resin causes whitening in the pre-heating of secondary molding; and the content of diethylene glycol in the resin increases, and there arise such problems that the glass transition temperature lowers, and the thermal stability is poor and the color tone degrades.

The present invention has been achieved in consideration of the above problems of conventional technologies, and has an object to provide a method for industrially advantageously producing a polyester resin having a longer half-crystallization time and having a lower content of diethylene glycol than conventional production methods.

### Solution to Problem

As a result of exhaustive studies, the present inventors have found that when there is produced a polyester resin comprising a diol structural unit having a cyclic acetal skeleton as its structural unit, use of an ester compound comprising a diol having a cyclic acetal skeleton as its structural unit as a supply source of the diol structural unit having a cyclic acetal skeleton can suppress the sublimation of the sublimable diol and can prevent the degradation of the cyclic acetal skeleton by a dicarboxylic acid, which would become a problem in direct esterification methods, and the gelation of the polyester resin due to the degradation, and further have found that there can be obtained the polyester resin having a long half-crystallization time and a low content of diethylene glycol; and these findings have led to the present invention.

That is, the present invention is as follows.
[1]
   A method for producing a polyester resin that comprises a dicarboxylic acid structural unit and a diol structural unit, the diol structural unit comprising a diol structural unit having a cyclic acetal skeleton,the method comprising
   a step of mixing and reacting an ester compound (A) having a cyclic acetal skeleton and an ester compound (B) having no cyclic acetal skeleton, and
   wherein the method satisfies the following conditions (1) and (2):
   (1) the ester compound (A) comprises a dicarboxylic acid structural unit and a diol structural unit, the diol structural unit comprising a diol structural unit having a cyclic acetal skeleton, and has an intrinsic viscosity of 0.1 to 1.5 dl/g as measured at 25°C in a mixed solution of phenol and 1,1,2,2-tetrachloroethane having a mass ratio of 6 : 4; and
   (2) the ester compound (B) comprises a dicarboxylic acid structural unit having no cyclic acetal skeleton and a diol structural unit having no cyclic acetal skeleton, and has an acid value of 1 micro equivalent/g or higher and lower than 150 micro equivalents/g.
[2] The method for producing the polyester resin according to [1], wherein the diol structural unit having a cyclic acetal skeleton comprised in the ester compound (A) is a diol structural unit derived from a compound represented by the general formula (a) or the general formula (b): 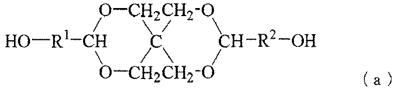 wherein R¹ and R² each independently represent a hydrocarbon group selected from the group consisting of divalent aliphatic hydrocarbon groups having 1 to 10 carbon atoms, divalent alicyclic hydrocarbon groups having 3 to 10 carbon atoms and divalent aromatic hydrocarbon groups having 6 to 10 carbon atoms, or 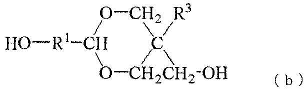 wherein R¹ is the same as above; and R³ represents a hydrocarbon group selected from the group consisting of monovalent aliphatic hydrocarbon groups having 1 to 10 carbon atoms, monovalent alicyclic hydrocarbon groups having 3 to 10 carbon atoms and monovalent aromatic hydrocarbon groups having 6 to 10 carbon atoms.
[3] The method for producing the polyester resin according to [1] or [2], wherein the diol structural unit having a cyclic acetal skeleton comprised in the ester compound (A) is a diol structural unit derived from 3,9-bis(1,1-dimethyl-2-hydroxyethyl)-2,4,8,10-tetraoxaspiro[5.5]undecane or 5-methylol-5-ethyl-2-(1,1-dimethyl-2-hydroxyethyl)-1,3-dioxane.
[4] The method for producing the polyester resin according to any of [1] to [3], wherein 2 to 80% by mol of all the diol structural units comprised in the ester compound (A) is the diol structural unit having a cyclic acetal skeleton.
[5] The method for producing the polyester resin according to any of [1] to [4], wherein 1 to 40% by mol of all the diol structural units comprised in the polyester resin is the diol structural unit having a cyclic acetal skeleton.

### Advantageous Effects of Invention

The method for producing a polyester resin according to the present invention can industrially advantageously produce a polyester resin having a long half-crystallization time and having a low content of diethylene glycol.

### Description of Embodiments

Hereinafter, an embodiment (hereinafter, referred to simply as "present embodiment") to carry out the present invention will be described in detail. The following present embodiment is exemplifications to interpret the present invention, and has no effect of limiting the present invention to the following content. The present invention can be carried out by being suitably changed and modified within its gist.

A method for producing a polyester resin according to the present embodiment is a method for producing a polyester resin comprising a dicarboxylic acid structural unit and a diol structural unit, the diol structural unit comprising a diol structural unit having a cyclic acetal skeleton. Further, the method for producing a polyester resin according to the present embodiment comprises a step of mixing and reacting an ester compound (A) having a cyclic acetal skeleton and an ester compound (B) having no cyclic acetal skeleton, wherein the method satisfies the following conditions (1) and (2):
(1) the ester compound (A) comprises a dicarboxylic acid structural unit and a diol structural unit, the diol structural unit comprising a diol structural unit having a cyclic acetal skeleton, and has an intrinsic viscosity of 0.1 to 1.5 dl/g as measured at 25°C in a mixed solution of phenol and 1,1,2,2-tetrachloroethane having a mass ratio of 6 : 4; and
(2) the ester compound (B) comprises a dicarboxylic acid structural unit having no cyclic acetal skeleton and a diol structural unit having no cyclic acetal skeleton, and has an acid value of 1 micro equivalent/g or higher and lower than 150 micro equivalents/g.

The method for producing a polyester resin according to the present embodiment, since being configured as described above, can industrially advantageously produce a polyester resin having a long half-crystallization time and having a low content of diethylene glycol. That is, the polyester resin (hereinafter, referred to also simply as "polyester resin (C)") produced in the present embodiment, since having a long half-crystallization time, can effectively prevent the turbidity due to the crystallization even in the case of being made into a thick molded article. In addition, since the amount of diethylene glycol formed is small, polyester resin (C) can be evaluated to be improved in the glass transition temperature and excellent in the heat resistance. Further, the method for producing a polyester resin according to the present embodiment can prevent the degradation of the cyclic acetal skeleton by water and a carboxyl group of the dicarboxylic acid which may be generated in production of a polyester resin containing, as a diol structural unit, a diol structural unit having a cyclic acetal skeleton. As a result, the gelation of the polyester resin and the increase of the molecular weight distribution can be prevented. In such a manner, unpreferable side reactions, which have become a problem in conventional production methods, are suppressed and a polyester resin containing few by-products can stably be produced. The polyester resin thus produced is excellent also in mechanical properties such as the heat resistance.

In the present embodiment, the ester compound (A) comprises a dicarboxylic acid structural unit and a diol structural unit, the diol structural unit comprising a diol structural unit having a cyclic acetal skeleton.
The diol structural unit having a cyclic acetal skeleton of the ester compound (A) is preferably a diol structural unit derived from a compound represented by the general formula (a) or the general formula (b).

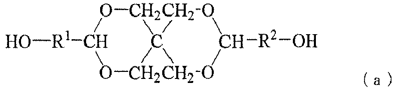

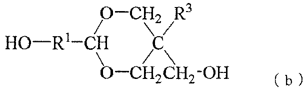

In the general formulae (a) and (b), R¹ and R² each independently represent a hydrocarbon group selected from the group consisting of divalent aliphatic hydrocarbon groups having 1 to 10 carbon atoms, divalent alicyclic hydrocarbon groups having 3 to 10 carbon atoms and divalent aromatic hydrocarbon groups having 6 to 10 carbon atoms. R¹ and R² are preferably each a methylene group, an ethylene group, a propylene group, a butylene group or a structural isomer thereof. The structural isomer is not limited to the following, but examples thereof include an isopropylene group and an isobutylene group. R³ represents a hydrocarbon group selected from the group consisting of monovalent aliphatic hydrocarbon groups having 1 to 10 carbon atoms, monovalent alicyclic hydrocarbon groups having 3 to 10 carbon atoms and monovalent aromatic hydrocarbon groups having 6 to 10 carbon atoms. R³ is preferably a methyl group, an ethyl group, a propyl group, a butyl group or a structural isomer thereof. The structural isomer is not limited to the following, but examples thereof include an isopropyl group and an isobutyl group. Use of these diols enables the half-crystallization time to be effectively made longer.

Compounds represented by the general formulae (a) and (b) are preferably 3,9-bis(1,1-dimethyl-2-hydroxyethyl)-2,4,8,10-tetraoxaspiro[5.5]undecane, 5-methylol-5-ethyl-2-(1,1-dimethyl-2-hydroxyethyl)-1,3-dioxane and the like. That is, the diol structural unit having a cyclic acetal skeleton contained in the ester compound (A) is preferably a diol structural unit derived from 3,9-bis(1,1-dimethyl-2-hydroxyethyl)-2,4,8,10-tetraoxaspiro[5.5]undecane or 5-methylol-5-ethyl-2-(1,1-dimethyl-2-hydroxyethyl)-1,3-dioxane; and these diols can be easily available, and enable the half-crystallization time to be effectively made long.

In the present embodiment, the ester compound (A) may contain a diol structural unit having no cyclic acetal skeleton. The diol structural unit having no cyclic acetal skeleton of the ester compound (A) is not especially limited, but examples thereof include aliphatic diols such as ethylene glycol, trimethylene glycol, 1,4-butanediol, 1,5-pentanediol, 1,6-hexanediol, diethylene glycol, propylene glycol and neopentyl glycol; alicyclic diols such as 1,3-cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,7-decahydronaphthalenedimethanol, tetralindimethanol, norbornanedimethanol, tricyclodecanedimethanol and pentacyclododecanedimethanol; polyether compounds such as polyethylene glycol, polypropylene glycol and polybutylene glycol; bisphenols such as 4,4'-(1-methylethylidene)bisphenol, methylenebisphenol (bisphenol F), 4,4'-cyclohexylidenebisphenol (bisphenol Z) and 4,4'-sulfonylbisphenol (bisphenol S); alkylene oxide adducts of the above bisphenols; aromatic dihydroxy compounds such as hydroquinone, resorcinol, 4,4'-dihydroxybiphenyl, 4,4'-dihydroxydiphenyl ether and 4,4'-dihydroxydiphenylbenzophenone; and the alkylene oxide adducts of the above aromatic dihydroxy compounds. In consideration of the mechanical strength and the heat resistance of the polyester resin and the easy availability of the diol, there are preferably ethylene glycol, trimethylene glycol, 1,4-butanediol, 1,4-cyclohexanedimethanol and the like; and ethylene glycol is more preferable. Here, the diol structural unit having no cyclic acetal skeleton may contain one of the above or two or more thereof.

In the present embodiment, the dicarboxylic acid structural unit of the ester compound (A) is not especially limited, but examples thereof include aliphatic dicarboxylic acids such as succinic acid, glutaric acid, adipic acid, pimelic acid, suberic acid, azelaic acid, sebacic acid, decanedicarboxylic acid, dodecanedicarboxylic acid, cyclohexanedicarboxylic acid, decalindicarboxylic acid, norbornanedicarboxylic acid, tricyclodecanedicarboxylic acid, pentacyclododecanedicarboxylic acid, 3,9-bis(1,1-dimethyl-2-carboxyethyl)-2,4,8,10-tetraoxaspiro[5.5]undecane, 5-carboxy-5-ethyl-2-(1,1-dimethyl-2-carboxyethyl)-1,3-dioxane and dimer acids; and aromatic dicarboxylic acids such as terephthalic acid, isophthalic acid, phthalic acid, 2-methylterephthalic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, biphenyldicarboxylic acid and tetralindicarboxylic acid. In consideration of the mechanical strength and the heat resistance of the polyester resin, aromatic dicarboxylic acids are preferable; and in consideration of the easy availability of dicarboxylic acids, more preferable are terephthalic acid, isophthalic acid and 2,6-naphthalenedicarboxylic acid. Here, the dicarboxylic acid structural unit may contain one of the above, or two or more thereof.

The ester compound (A) can be produced using conventionally known production methods of polyester resins.

The proportion of a diol structural unit having a cyclic acetal skeleton in all the diol structural units contained in the ester compound (A) is preferably 2 to 80% by mol, more preferably 10 to 75% by mol, still more preferably 20 to 70% by mol, and further still more preferably 30 to 65% by mol. The proportion of a diol structural unit having a cyclic acetal skeleton in all the diol structural units of the polyester resin (C) is usually lower than the proportion of a diol structural unit having a cyclic acetal skeleton in all the diol structural units of the ester compound (A). Therefore, from the viewpoint of securing the variety in the composition of the polyester resin (C), it is preferable that the proportion of a diol structural unit having a cyclic acetal skeleton in all the diol structural units of the ester compound (A) is made to be 2% by mol or higher. Further, from the viewpoint of securing good crystallinity of the ester compound (A), and from the viewpoint of securing the handleability including the solubility when the ester compound (A) is mixed with the ester compound (B), it is preferable that the proportion of a diol structural unit having a cyclic acetal skeleton in all the diol structural units of the ester compound (A) is made to be 80% by mol or lower. The ester compound (A) in which the proportion of a diol structural unit having a cyclic acetal skeleton in all the diol structural units is 2 to 80% by mol can be obtained, for example, by regulating the amounts of raw materials added. Here, the proportion of a diol structural unit having a cyclic acetal skeleton in all the diol structural units contained in the ester compound (A) can be measured by a method described in Examples described later.

It is especially preferable that 90% by mol or more of all the diol structural units contained in the ester compound (A) is 3,9-bis(1,1-dimethyl-2-hydroxyethyl)-2,4,8,10-tetraoxaspiro[5.5]undecane and ethylene glycol, and the proportion of a diol structural unit having a cyclic acetal skeleton in all the diol structural units is in the above-mentioned preferable range. Further, it is preferable that the proportion of the total of terephthalic acid, isophthalic acid and 2,6-naphthalenedicarboxylic acid in all the dicarboxylic acid structural units contained in the ester compound (A) is 60% by mol or higher; more preferable is 70% by mol or higher; still more preferable is 80% by mol or higher; and further still more preferable is 90% by mol or higher.

The ester compound (A) may contain a metal species, which is not limited to the following, but examples thereof include zinc, lead, cerium, cadmium, manganese, cobalt, lithium, sodium, potassium, calcium, nickel, magnesium, vanadium, aluminum, titanium, germanium, antimony, tin and phosphorus. Among these, it is preferable that at least one selected from titanium, germanium, antimony, potassium, phosphorus and cobalt is contained. Here, these metal species may be contained singly or in combinations of two or more. The amounts of the metal species are each, with respect to the ester compound (A), preferably 1,000 ppm or smaller, more preferably 200 ppm or smaller, and still more preferably 100 ppm or smaller.

The intrinsic viscosity of the ester compound (A) needs to be 0.1 to 1.5 dl/g as a value measured at 25°C in a mixed solvent of phenol and 1,1,2,2-tetrachloroethane having a mass ratio of 6 : 4. The intrinsic viscosity of the ester compound (A) is preferably 0.3 to 1.0 dl/g, more preferably 0.4 to 0.8 dl/g, still more preferably 0.4 to 0.75 dl/g. When the intrinsic viscosity is lower than 0.1 dl/g, the handling of the ester compound (A) becomes difficult; therefore, the case is not preferable. Specifically, due to that the viscosity in a melt state is too low and the mechanical physical properties are low and brittle, for example, the polyester resin becomes difficult to take out from a production plant and pelletize. Further, if the intrinsic viscosity exceeds 1.5 dl/g, the melt viscosity becomes excessively high when the ester compound (A) is used as a raw material of the polyester resin, impairing the flowability of a mixture with the ester compound (B), which is another raw material, and needing undue heating in order to provide the flowability in some cases; therefore, the case is not preferable.

The shape of the ester compound (A) is not especially limited, but includes, for example, pellet, flake and powder.

Specific examples of the ester compound (A) are not limited to the following, but include ALTESTER S5812, ALTESTER S4500, ALTESTER S3000, ALTESTER S2000, ALTESTER SN4500, ALTESTER SN3000 and ALTESTER SN1500, which are manufactured by Mitsubishi Gas Chemical Co., Ltd.

In the present embodiment, the ester compound (B) consists of a diol structural unit having no cyclic acetal skeleton and a dicarboxylic acid structural unit having no cyclic acetal skeleton.

The diol structural unit having no cyclic acetal skeleton of the ester compound (B) according to the present embodiment is not especially limited, but can contain the above-mentioned examples of the diol structural unit having no cyclic acetal skeleton of the ester compound (A).

The dicarboxylic acid structural unit having no cyclic acetal skeleton of the ester compound (B) according to the present embodiment is not especially limited, but examples thereof include aliphatic dicarboxylic acids such as succinic acid, glutaric acid, adipic acid, pimelic acid, suberic acid, azelaic acid, sebacic acid, decanedicarboxylic acid, dodecanedicarboxylic acid, cyclohexanedicarboxylic acid, decalindicarboxylic acid, norbornanedicarboxylic acid, tricyclodecanedicarboxylic acid, pentacyclododecanedicarboxylic acid and dimer acids; and aromatic dicarboxylic acids such as terephthalic acid, isophthalic acid, phthalic acid, 2-methylterephthalic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, biphenyldicarboxylic acid and tetralindicarboxylic acid. In consideration of the mechanical strength and the heat resistance of the polyester resin, aromatic dicarboxylic acids are preferable; and in consideration of the easy availability of dicarboxylic acids, more preferable are terephthalic acid, isophthalic acid and 2,6-naphthalenedicarboxylic acid; and still more preferable is terephthalic acid. Here, the dicarboxylic acid structural unit may contain one of the above, or may contain two or more thereof. Further, in the case of using an alkyl ester of the above dicarboxylic acid, the ester compound (B) having an acid value of 1 micro equivalent/g or higher and lower than 150 micro equivalents/g is likely to be easily obtained; then, the case is preferable.

In the present embodiment, in order to regulate the melt viscoelasticity, the molecular weight and the like of the ester compound (B), there may be used, as a raw material of the ester compound (B), monoalcohols such as butyl alcohol, hexyl alcohol, and octyl alcohol; polyhydric alcohols of tri- or more hydric alcohols such as trimethylolpropane, glycerol, 1,3,5-pentanetriol and pentaerythritol; monocarboxylic acids such as benzoic acid, propionic acid and butyric acid, and ester-forming derivatives thereof; polyvalent carboxylic acids such as trimellitic acid and pyromellitic acid, and ester-forming derivatives thereof; and oxyacids such as glycolic acid, lactic acid, hydroxybutyric acid, 2-hydroxyisobutyric acid and hydroxybenzoic acid, and ester-forming derivatives thereof, in the range of not impairing the purpose of the present embodiment.

A method for producing the ester compound (B) is not especially limited. For example, in the case where an alkyl ester of a dicarboxylic acid is used as the dicarboxylic acid structural unit, the production method can similarly carry out the transesterification step and the polycondensation step in conventional production methods using a transesterification method for polyester resins, and can adopt conventionally known conditions and catalysts. Specific examples of the production method include a production method involving transesterifying a dicarboxylate ester with a diol. Further, in the case where a compound in the state of being a carboxylic acid is used as the dicarboxylic acid structural unit, the production method can similarly carry out the esterification step and the polycondensation step in conventional production methods using a direct esterification method for polyester resins, and can adopt conventionally known conditions and catalysts. Specific examples of the production method include a production method involving direct esterification reaction of a dicarboxylic acid with a diol, and a production method involving adding a dicarboxylic acid and a diol to a seed oligomer and carrying out an esterification reaction.

In the case where the ester compound (B) is produced by using an alkyl ester of a dicarboxylic acid as the dicarboxylic acid structural unit, the molar ratio of a diol to be charged to the dicarboxylate ester of the raw material is preferably 1.01 to 10, more preferably 1.05 to 5, and still more preferably 1.10 to 2.2. Making the molar ratio in the above range is likely to more suppress unpreferable side reactions such as dehydration etherification of the diol.

The temperature and the pressure in the transesterification step in the case of using an alkyl ester of a dicarboxylic acid as the carboxylic acid structural unit of the ester compound (B) are similar to the conditions in conventional production methods using transesterification methods of polyester resins, and are not especially limited, but the pressure of the reaction system can be usually made to be 10 to 500 kPa. Further, the reaction temperature is usually 80 to 270°C, preferably 150 to 265°C, and more preferably 200 to 260°C. The transesterification is carried out while an alcohol formed derived from the ester formation is being extracted outside the reaction system, until the ester conversion rate calculated from the amount of the alcohol extracted becomes 80 to 98%. The transesterification is carried out preferably until the ester conversion rate becomes 85 to 96%; more preferably until becoming 92 to 95%.

Further, in the case where the ester compound (B) is produced by using a compound in the state of being a carboxylic acid as the dicarboxylic acid structural unit, the molar ratio of a diol to be charged to the dicarboxylic acid of the raw material is preferably 1.01 to 10, more preferably 1.05 to 5, and still more preferably 1.10 to 2. Making the molar ratio in the above range is likely to more suppress unpreferable side reactions such as dehydration etherification of the diol.

The temperature and the pressure in the esterification step in the case of using a compound in the state of being a carboxylic acid as the dicarboxylic acid structural unit of the ester compound (B) are similar to the conditions in conventional production methods using direct esterification methods of polyester resins, and are not especially limited, but the pressure of the reaction system can be usually made to be 10 to 500 kPa. Further, the reaction temperature is usually 80 to 270°C, preferably 150 to 265°C, and more preferably 200 to 260°C. The esterification reaction is carried out while water is being extracted outside the reaction system, until the ester conversion rate calculated from the amount of the water extracted becomes usually 80 to 99%. The esterification reaction is carried out preferably until the ester conversion rate becomes 85 to 98%; more preferably until becoming 92 to 97%.

The production process of the ester compound (B) may use a conventionally known catalyst. The catalyst is not especially limited, but examples thereof include metal compounds (for example, fatty acid salts, carbonates, phosphates, hydroxides, chlorides, oxides and alkoxides) of zinc, lead, cerium, cadmium, manganese, cobalt, lithium, sodium, potassium, calcium, nickel, magnesium, vanadium, aluminum, titanium, germanium, antimony, tin and the like; and metallic magnesium. These can be used singly or in combinations of two or more. The amounts of the catalytic components used each can be made to be, with respect to the ester compound (B), usually 1,000 ppm or smaller, and are each preferably 200 ppm or smaller, more preferably 100 ppm or smaller, and still more preferably 50 ppm or smaller.

The production process of the ester compound (B) may use a phosphorus compound. The amount of the phosphorus compound used can be made to be, with respect to the ester compound (B), usually 1,000 ppm or smaller, and is preferably 200 ppm or smaller, and more preferably 100 ppm or smaller. The phosphorus compound is not especially limited, but examples thereof include phosphate esters and phosphite esters; and among these, preferable are trimethyl phosphate, triethyl phosphate, triphenyl phosphate, trimethyl phosphite, triethyl phosphite and triphenyl phosphite; and more preferable is triethyl phosphate.

The production process of the ester compound (B) may use a basic compound. The amount of the basic compound used is, with respect to the ester compound (B), usually 1,000 ppm or smaller, preferably 200 ppm or smaller, more preferably 100 ppm or smaller, and still more preferably 50 ppm or smaller. The basic compound is not especially limited, but examples thereof include carbonates, hydroxides, carboxylates, oxides, chlorides and alkoxides of alkali metals such as lithium, sodium and potassium; carbonates, hydroxides, carboxylates, oxides, chlorides and alkoxides of alkaline earth metals such as beryllium, magnesium and calcium; and amine compounds such as trimethylamine and triethylamine. Among these, preferable are carbonates, hydroxides and carboxylates of alkali metals, and carbonates, hydroxides and carboxylates of alkaline earth metals; and more preferable are carboxylates of alkali metals. Use of carboxylates of alkali metals is likely to more improve the thermal degradation resistance, and is likely to additionally more improve the transparency of the resin. The carboxylates of alkali metals are not limited to the following, but examples thereof include formates, acetates, propionates, butyrates, isobutyrates, valerates, caproates, caprylates, caprates, laurates, myristates, palmitates, stearates, benzoates and the like of alkali metals. Among these, preferable are formates, acetates, propionates, butyrates, isobutyrates and benzoates of alkali metals; and more preferable are potassium acetate, sodium acetate, lithium acetate, potassium propionate, sodium propionate and lithium propionate. These can be used singly or in combinations of two or more.

The acid value of the ester compound (B) is 1 micro equivalent/g or higher and lower than 150 micro equivalents/g, preferably 2 micro equivalents/g or higher and 120 micro equivalents/g or lower, and more preferably 4 micro equivalents/g or higher and 100 micro equivalents/g or lower. Making the acid value in the range of 1 micro equivalent/g or higher and lower than 150 micro equivalents/g can suppress the gelation and the increase in the molecular weight distribution of the polyester resin (C), and can reduce the content of diethylene glycol in the polyester resin (C). Here, the acid value can be measured by a method described in Examples described later.

The polyester resin (C) according to the present embodiment is a polyester resin comprising a dicarboxylic acid structural unit and a diol structural unit, the diol structural unit comprising a diol structural unit having a cyclic acetal skeleton. Here, in the present embodiment, the total amount of the dicarboxylic acid structural unit and the diol structural unit is not especially limited, but it is preferable that 90% by mol or more of all the structural units of the polyester resin (C) is a dicarboxylic acid structural unit and a diol structural unit.

A method for producing the polyester resin (C) according to the present embodiment is a method for mixing and reacting the ester compound (B) with the ester compound (A), and the method can adopt the condition, a catalyst and the like in the conventional known polycondensation step of polyester resins. Preferable forms thereof include a form in which the ester compound (A) is added to the ester compound (B) in a molten state produced by the above method. In the present embodiment, even if the ester compound (A) is a polymer, there is a possibility that randomization occurs simultaneously in the polycondensation step, and a step of randomization may be carried out before this step, but is not essential.

Also the temperature and the pressure of the production process of the polyester resin (C) according to the present embodiment can be similar to those of the polycondensation step in conventional production methods of polyester resins. For example, the polymerization temperature is gradually raised and is finally made to be preferably 200 to 300°C; and the pressure is gradually reduced and is finally made to be preferably 300 Pa or lower. Under this condition, diols having no cyclic acetal skeleton are mainly extracted outside the system.

The catalyst usable in the production process of the polyester resin (C) according to the present embodiment can be a conventionally known one, and is not especially limited, but examples thereof include metal compounds (for example, fatty acid salts, carbonates, phosphates, hydroxides, chlorides, oxides and alkoxides) of zinc, lead, cerium, cadmium, manganese, cobalt, lithium, sodium, potassium, calcium, nickel, magnesium, vanadium, aluminum, titanium, germanium, antimony, tin and the like; and metallic magnesium. These can be used singly or in combinations of two or more. Among these, preferable are alkoxides of titanium, germanium oxides and antimony oxides; and more preferable are tetrabutoxytitanium, germanium dioxide and antimony trioxide. The catalytic component may be a derived one from the ester compound (A) having a cyclic acetal skeleton or the ester compound (B) having no cyclic acetal skeleton, and another addition of a catalyst is not necessarily needed. The amounts of the catalysts each can be made to be, with respect to the obtained polyester resin (C), usually 1,000 ppm or smaller, and are each preferably 200 ppm or smaller, and more preferably 100 ppm or smaller.

The method for producing the polyester resin (C) according to the present embodiment may use a diol having no cyclic acetal skeleton, other than the ester compounds (A) and (B). Such a diol having no cyclic acetal skeleton is not especially limited, but there may be used diols as the raw material, for example, aliphatic diols such as ethylene glycol, trimethylene glycol, 1,4-butanediol, 1,5-pentanediol, 1,6-hexanediol, diethylene glycol, propylene glycol and neopentyl glycol; alicyclic diols such as 1,3-cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,7-decahydronaphthalenedimethanol, tetralindimethanol, norbornanedimethanol, tricyclodecanedimethanol and pentacyclododecanedimethanol; polyether compounds such as polyethylene glycol, polypropylene glycol and polybutylene glycol; bisphenols such as 4,4'-(1-methylethylidene)bisphenol, methylenebisphenol (bisphenol F), 4,4'-cyclohexylidenebisphenol (bisphenol Z) and 4,4'-sulfonylbisphenol (bisphenol S); alkylene oxide adducts of the above bisphenols; aromatic dihydroxy compounds such as hydroquinone, resorcinol, 4,4'-dihydroxybiphenyl, 4,4'-dihydroxydiphenyl ether and 4,4'-dihydroxydiphenylbenzophenone; and the alkylene oxide adducts of the above aromatic dihydroxy compounds. In consideration of improving the impact resistance, use of 1,4-cyclohexanedimethanol is preferable. Here, the diols having no cyclic acetal skeleton described above may be used singly or in combinations of two or more. The timing of the addition of these diols is not especially limited, but can be carried out, for example, when the ester compound (B) and the ester compound (A) are mixed.

The method for producing the polyester resin (C) according to the present embodiment, in order to regulate the melt viscoelasticity, the molecular weight and the like, may use, as raw materials, other than the ester compounds (A) and (B), monoalcohols such as butyl alcohol, hexyl alcohol, and octyl alcohol; polyhydric alcohols of tri- or more hydric alcohols such as trimethylolpropane, glycerol, 1,3,5-pentanetriol and pentaerythritol; monocarboxylic acid such as benzoic acid, propionic acid and butyric acid, and ester-forming derivatives thereof; polyvalent carboxylic acids such as trimellitic acid and pyromellitic acid, and ester-forming derivatives thereof; and oxyacids such as glycolic acid, lactic acid, hydroxybutyric acid, 2-hydroxyisobutyric acid and hydroxybenzoic acid, and ester-forming derivatives thereof, in the range of not impairing the purpose of the present embodiment.

The method for producing the polyester resin (C) according to the present embodiment may use a phosphorus compound. The phosphorus compound may be a derived one from the ester compound (A) having a cyclic acetal skeleton or the ester compound (B) having no cyclic acetal skeleton. The amount of the phosphorus compound used can be made to be, with respect to the polyester resin (C) to be obtained, usually 1,000 ppm or smaller, and is preferably 200 ppm or smaller, and more preferably 100 ppm or smaller. The phosphorus compound is not especially limited to the following, but examples thereof include phosphate esters and phosphite esters; and among these, preferable are trimethyl phosphate, triethyl phosphate, triphenyl phosphate, trimethyl phosphite, triethyl phosphite and triphenyl phosphite; and more preferable is triethyl phosphate.

The production process of the polyester resin (C) according to the present embodiment may use a basic compound. The basic compound may be a derived one from the ester compound (A) having a cyclic acetal skeleton or the ester compound (B) having no cyclic acetal skeleton. The amount of the basic compound used can be made to be, with respect to the polyester resin (C) to be obtained, usually 1,000 ppm or smaller, and is preferably 200 ppm or smaller, more preferably 100 ppm or smaller, and still more preferably 50 ppm or smaller. The basic compound is not especially limited, but examples thereof include carbonates, hydroxides, carboxylates, oxides, chlorides and alkoxides of alkali metals such as lithium, sodium and potassium; carbonates, hydroxides, carboxylates, oxides, chlorides and alkoxides of alkaline earth metals such as beryllium, magnesium and calcium; and amine compounds such as triethylamine and trimethylamine. Among these, preferable are carbonates, hydroxides and carboxylates of alkali metals, and carbonates, hydroxides and carboxylates of alkaline earth metals; and more preferable are carboxylates of alkali metals. Use of carboxylates of alkali metals is likely to more improve the thermal degradation resistance, and is likely to additionally more improve the transparency of the resin. The carboxylates of alkali metals are not limited to the following, but examples thereof include formates, acetates, propionates, butyrates, isobutyrates, valerates, caproates, caprylates, caprates, laurates, myristates, palmitates, stearates and benzoates. Among these, preferable are formates, acetates, propionates, butyrates, isobutyrates and benzoates of alkali metals; and preferable are potassium acetate, sodium acetate, lithium acetate, potassium propionate, sodium propionate and lithium propionate. These can be used singly or in combinations of two or more.

Further, the production process of the polyester resin (C) according to the present embodiment can use known etherification preventive agents and various types of stabilizers such as thermal stabilizers and light stabilizers, polymerization regulators and the like. Specific examples of the etherification preventive stabilizers include, though not being limited to the following, amine compounds. Additionally, there may be added light stabilizers, antistatic agents, lubricants, antioxidants, mold release agents, complementary color agents, and the like. Specific examples of the complementary color agents include, though not being limited to the following, cobalt compounds.

In the present embodiment, from the viewpoint of more improving the heat resistance and the mechanical strength of the polyester resin (C), it is preferable that 1 to 40% by mol in all the diol structural units contained in the polyester resin (C) is a diol structural unit having a cyclic acetal skeleton; more preferably 2 to 35% by mol; and still more preferably 3 to 30% by mol. The polyester resin (C) in which 1 to 40% by mol in all the diol structural units is a diol structural unit having a cyclic acetal skeleton can be obtained, for example, by regulating the mixing ratio of the ester compound (A) and the ester compound (B). Here, the proportion of a diol structural unit having a cyclic acetal skeleton in all the diol structural units contained in the polyester resin (C) can be measured by a method described in Examples described later.

In the present embodiment, the proportion of a diol structural unit having a cyclic acetal skeleton in all the diol structural units of the polyester resin (C) is lower than the proportion of a diol structural unit having a cyclic acetal skeleton in all the diol structural units contained in the ester compound (A). In consideration of the productivity, it is preferable that the proportion of the diol structural unit having a cyclic acetal skeleton in all the diol structural units contained in the polyester resin (C) is 1/2 or lower of the proportion of a diol structural unit having a cyclic acetal skeleton in all the diol structural units contained in the ester compound (A).

The intrinsic viscosity of the polyester resin (C) is, as a value measured at 25°C in a mixed solvent of phenol and 1,1,2,2-tetrachloroethane having a mass ratio of 6 : 4, preferably 0.1 to 1.5 dl/g, more preferably 0.3 to 1.0 dl/g, still more preferably 0.4 to 0.8 dl/g, and further still more preferably 0.4 to 0.75 dl/g.

The polyester resin (C) obtained by the production method according to the present embodiment, since the content of diethylene glycol is low, for example, as compared with a polyester resin obtained by a method indicated in Japanese Patent Laid-Open No. 2005-314643, is higher in the glass transition temperature and better in the heat resistance. Further, since the half-crystallization time becomes long, the polyester resin (C) becomes a resin excellent in the transparency. Here, the content of diethylene glycol and the half-crystallization time can be checked by methods described in Examples described later.

The polyester resin (C), since due to its relatively long half-crystallization time, the transparency can be maintained in molding of thick articles, and the pre-heating temperature can be raised in the secondary molding, has advantages of being able to reducing strains, improving the heat resistance of containers, and the like, and then can be used for various applications. The applications of the polyester resin (C) are not limited to the following, but examples thereof include injection molded articles, sheets, films, pipes, extruded articles such as fibers, bottles, foamed articles, pressure-sensitive adhesive materials, adhesive agents and coating materials. In more detail, the sheets may be of a single layer or of a multi-layer, and the films may also be of a single layer or of a multi-layer, and may be ones unstretched, or ones unidirectionally or bidirectionally stretched, and may be laminated on a steel plate or the like. The fibers may be of a single component type or a composite type, and may be short fibers or long fibers. Further, the cross-sectional shape of their monofilaments is not especially limited, and examples thereof include round ones, elliptical ones, polygonal ones such as trigonal, tetragonal and hexagonal ones, profile cross-sections such as star, X, Y, H, petal and hat ones, and hollow ones, and may be ones partially modified therefrom or ones synthesized therefrom. Further, for the use for industrial materials, the shape may be combinations of these various cross-sectional shapes. The bottles may be direct blow bottles or injection blow bottles, or may be injection molded ones. The foamed articles may be bead foamed articles or extruded foamed articles.

Here, resins obtained by simply blending an ester compound (A) with a polyester resin having no cyclic acetal skeleton by an extruder have different physical properties from the polyester resin (C) according to the present embodiment, and are resins poor in the color tone and low in the rising degree of the polymerization degree, as compared with the polyester resin (C).

### Examples

Hereinafter, the present embodiment will be described more specifically by way of Examples, but the present embodiment is not limited to these Examples. Each evaluation was carried out as follows, and the evaluation results are shown in tables 1 to 3.

### [Evaluation of the polyester resin (C)]

### 1. The copolymerization rate and the like of a diol having a cyclic acetal skeleton

The copolymerization rate of a diol having a cyclic acetal skeleton, the ratio of a terephthalic acid unit and the amount of DEG in a polyester resin were calculated by ¹H-NMR measurements. A measurement apparatus used therefor was Ascend^{™} 500, manufactured by Bruker BioSpin K.K. A solvent used therefor was deuterated chloroform. Here, in the case where the polyester resin was insoluble to deuterated chloroform, a few drops of trifluoroacetic acid were used to allow the polyester resin to be dissolved in the deuterated chloroform.

### 2. The intrinsic viscosity

A polyester resin was heated and dissolved at 90°C in a mixed solvent of phenol/1,1,2,2-tetrachloroethane (mass ratio = 6 : 4) to thereby prepare solutions of 0.2, 0.4 and 0.6 g/dl, respectively. Thereafter, each solution was cooled down to 25°C to thereby prepare a measurement sample. The intrinsic viscosity was measured at a temperature of 25°C by using a relative viscometer Y501, manufactured by Viscotek Co.

### 3. The measurement of the molecular weight

5 mg of a polyester resin was dissolved in 5 g of a 10-mmol/L sodium tetrafluoroacetate/hexafluoroisopropanol, and measured by gel permeation chromatography (GPC), being calibrated with standard polymethyl methacrylates, to determine a weight-average molecular weight (Mw) and a number-average molecular weight (Mn). The molecular weight polydispersity index (Mw/Mn) was determined from the obtained values of Mw and Mn. The GPC used a HLC-8320 GPC, manufactured by Tosoh Corp., in which one column of TSKgel guardcolumn SuperH-H, manufactured by Tosoh Corp., and two columns of TSKgel SuperHM-H (6.0 mm I.D. × 150 mm), manufactured by Tosoh Corp., were connected, and the measurement was carried out at a column temperature of 40°C. Its eluate was a 10-mmol/L sodium tetrafluoroacetate/hexafluoroisopropanol, which was made to flow at a flow rate of 0.3 mL/min; and the measurement was carried out by using an RI detector.

### 4. The measurement of the half-crystallization time

The measurement of the half-crystallization time used a polymer crystallization rate measuring apparatus MK-701 type, manufactured by Kotaki Mfg. Co., Ltd.; and a sample was prepared by melting a polyester resin between two sheets of cover glass (18 mm × 18 mm). The sample was held in a melting oven heated at a temperature of 280°C for 3 min, and then moved into an optical path in a silicone oil bath heated at a temperature of 160°C. Then, the intensity of light which the sample under the crystallization process transmitted was detected and recorded on a recorder. The time at which the intensity of the transmitted light decreased to half was read from the acquired chart, and the half-crystallization time was calculated.

### [Evaluation of the ester compound (A)]

### 1. The copolymerization rate of a diol having a cyclic acetal skeleton

The measurement was carried out by the same method as in the above-mentioned 1. of [Evaluation of the polyester resin (C)].

### 2. The intrinsic viscosity

The measurement was carried out by the same method as in the above-mentioned 2. of [Evaluation of the polyester resin (C)].

### [Evaluation of the ester compound (B)]

### 1. A diol structural unit to a dicarboxylic acid structural unit (G/A)

The copolymerization rate of a diol in an ester compound and the copolymerization rate of a dicarboxylic acid therein were calculated by ¹H-NMR measurements. A measurement apparatus used therefor was Ascend^{™} 500, manufactured by Bruker BioSpin K.K. A solvent used therefor was deuterated chloroform. Here, in the case where the ester compound was insoluble to deuterated chloroform, a few drops of trifluoroacetic acid were used to allow the ester compound to be dissolved in the deuterated chloroform.

### 2. The acid value

1.5 g of an ester compound was heated and dissolved in 50 mL of a mixed solvent of o-cresol/1,1,2,2-tetrachloroethane/chloroform (mass ratio = 70 : 15 : 15). The solution was subjected to a potentiometric titration with an ethanol solution of 0.1N potassium hydroxide. The titration was carried out by using an automatic titration apparatus COM-1600, manufactured by Hiranuma Sangyo Corp.

### <Production Example 1: production of an ester compound (B1)>

Dimethyl terephthalate, dimethyl naphthalenedicarboxylate, ethylene glycol and tetrabutoxytitanium were added to a 3-L polyester production apparatus equipped with a packed rectifying column, a partial condenser, a stirring blade, a heating device and a nitrogen introducing tube, and was subjected to a transesterification at 230°C at normal pressure to thereby obtain an ester compound (B1) while methanol formed was being distilled out.

The amounts of the components added and used for the reaction, and the evaluation results of the ester compound (B1) are shown in Table 1.

### <Production Example 2: production of an ester compound (B2)>

A seed oligomer (D1) having a molar ratio of 2.0 of a diol structural unit (which was derived wholly from ethylene glycol) to a dicarboxylic acid structural unit (which was derived wholly from terephthalic acid) was placed in a 3-L polyester production apparatus equipped with a packed rectifying column, a partial condenser, a stirring blade, a heating device and a nitrogen introducing tube; and a dicarboxylic acid, and a diol having no cyclic acetal skeleton were added so as to become a predetermined molar ratio, and was subjected to an esterification reaction at 240°C at normal pressure to thereby obtain an ester compound (B2) while water formed was being distilled out.

The amounts of the components added and used for the reaction, and the evaluation results of the ester compound (B2) are shown in Table 1.

### <Production Example 3: production of an ester compound (B3)>

A seed oligomer (D2) having a molar ratio of 1.2 of a diol structural unit (which was derived wholly from ethylene glycol) to a dicarboxylic acid structural unit (which was derived wholly from terephthalic acid) was placed in a 3-L polyester production apparatus equipped with a packed rectifying column, a partial condenser, a stirring blade, a heating device and a nitrogen introducing tube; and a dicarboxylic acid, and a diol having no cyclic acetal skeleton were added so as to become a predetermined molar ratio, and was subjected to an esterification reaction at 240°C at normal pressure to thereby obtain an ester compound (B3) while water formed was being distilled out. The esterification reaction end point was made earlier by 2 hours than in Production Example 2 for obtaining the ester compound (B3).

The amounts of the components added and used for the reaction, and the evaluation results of the ester compound (B3) are shown in Table 1.

### <Example 1>

As the ester compound (A), ALTESTER S4500 (hereinafter, described as an ester compound (A1)), manufactured by Mitsubishi Gas Chemical Co., Ltd., was used. The evaluation results are shown in Table 2. Further, as the ester compound (B), the ester compound (B1) produced in Production Example 1 was used.

The ester compound (B1) in an amount indicated in Table 3 was placed in a 1-L polyester production apparatus equipped with a total condenser, a cold trap, a stirring blade, a heating device and a nitrogen introducing tube, and heated at normal pressure in a nitrogen atmosphere up to an internal temperature of 250°C. After the temperature rise, there were added germanium dioxide as a catalyst, triethyl phosphate as a thermal stabilizer, potassium acetate as a basic compound and cobalt acetate as a complementary color agent; and the ester compound (A1) was added; and while the temperature was raised up to 280°C, the pressure was gradually reduced to a pressure of 100 Pa or lower to thereby distill out mainly the diol having no cyclic acetal skeleton. The viscosity of the reaction product gradually rose; and the reaction was ended at the time point when the viscosity became a proper melt viscosity to thereby obtain a polyester resin (C1).

The amounts of the components added and used for the reaction, and the evaluation results of the polyester resin (C1) are shown in Table 3.

### <Example 2>

As the ester compound (A), ALTESTER S5812 (hereinafter, described as an ester compound (A2)), manufactured by Mitsubishi Gas Chemical Co., Ltd., was used. The evaluation results are shown in Table 2. Further, as the ester compound (B), the ester compound (B2) produced in Production Example 2 was used.

The ester compound (B2) in an amount indicated in Table 3 was placed in a 1-L polyester production apparatus equipped with a total condenser, a cold trap, a stirring blade, a heating device and a nitrogen introducing tube, and heated at normal pressure in a nitrogen atmosphere up to an internal temperature of 260°C. After the temperature rise, there were added tetrabutoxytitanium and antimony trioxide as catalysts, triethyl phosphate as a thermal stabilizer, potassium acetate as a basic compound and cobalt acetate as a complementary color agent; and the ester compound (A2) was added; and while the temperature was raised up to 280°C, the pressure was gradually reduced to a pressure of 100 Pa or lower to thereby distill out mainly the diol having no cyclic acetal skeleton. The viscosity of the reaction product gradually rose; and the reaction was ended at the time point when the viscosity became a proper melt viscosity to thereby obtain a polyester resin (C2).

### <Comparative Example 1>

As the ester compound (A), ALTESTER S5812 (hereinafter, described as an ester compound (A3)), manufactured by Mitsubishi Gas Chemical Co., Ltd., was used. The evaluation results are shown in Table 2. A polyester resin was obtained by carrying out the reaction under the same condition as in Example 2, except for using the ester compound (B3) produced in Production Example 3 as the ester compound (B).

The amounts of the components added and used for the reaction, and the evaluation results of the obtained polyester resin are shown in Table 3.

### <Comparative Example 2>

A polyester resin having a cyclic acetal skeleton was produced according to a method indicated in Japanese Patent Laid-Open No. 2005-314643. Specifically, 1,108.2 g of a seed oligomer (D2) having a molar ratio of 1.2 of a diol structural unit (which was derived wholly from ethylene glycol) to a dicarboxylic acid structural unit (which was derived wholly from terephthalic acid) was placed in a 3-L polyester production apparatus equipped with a packed rectifying column, a partial condenser, a stirring blade, a heating device and a nitrogen introducing tube; 724.1 g of a high-purity terephthalic acid and 135.3 g of ethylene glycol were added, and were subjected to an esterification reaction at 240°C at normal pressure; while water formed was being distilled out, the esterification reaction end point was made earlier than in Production Example 2 to thereby obtain an ester. 189.4 g of ethylene glycol and 0.228 g of germanium dioxide for depolymerization were added to the obtained ester, and subjected to a depolymerization at 215°C at normal pressure to thereby obtain an ester compound (B4) having an acid value of 92.9 micro equivalents/g.

211.3 g of ethylene glycol for depolymerization was added to 258.4 g of the obtained ester compound (B4), and subjected further to a depolymerization at 215°C at normal pressure. While water formed was distilled out, the reaction was carried out for 3 hours; thereafter, the diol was distilled out at 215°C at 13.3 kPa to thereby obtain an ester having an acid value of 25 micro equivalents/g.

85.8 g of 3,9-bis(1,1-dimethyl-2-hydroxyethyl)-2,4,8,10-tetraoxaspiro[5.5]undecane as a diol having a cyclic acetal skeleton, 0.0385 g of tetrabutoxytitanium and 0.0296 g of germanium dioxide as catalysts, 0.2035 g of triethyl phosphate as a thermal stabilizer, 0.0444 g of potassium acetate as a basic compound, and 0.0210 g of cobalt acetate as a complementary color agent were added to the obtained ester, and reacted at 225°C at 13.3 kPa for 3 hours. The oligomer was heated and reduced in pressure and finally subjected to a polycondensation reaction at 280°C at 13.3 kPa or lower; and when a predetermined melt viscosity was attained, the reaction was ended to thereby obtain a polyester resin.

The evaluation results of the obtained polyester resin are shown in Table 3.

**[Table 1]**

| | Production Example 1 | Production Example 2 | Production Example 3 |
|---|---|---|---|
| Ester Compound (B) Added, g | B1 | B2 | B3 |
| DMT | 928.2 | - | - |
| NDCM | 389.2 | - | - |
| Seed Oligomer (D) | - | 1108.2 | 981 |
| PTA | - | 724.1 | 796.6 |
| EG | 791.2 | 135.3 | 386.9 |
| TBT | 0.108 | - | - |
| GeO₂ | - | - | - |
| EG for Depolymerization | - | - | - |
| Evaluation of Ester Compound (B) | | | |
| Acid Value, micro equivalents/g | 8.5 | 97 | 435.8 |
| G/A | 2.04 | 1.39 | 1.25 |

**[Table 2]**

| Evaluation of Ester Compound (A) | A1 | A2 | A3 |
|---|---|---|---|
| Composition, % by mol | | | |
| SPG in Diol Structural unit | 47.2 | 59.6 | 62.2 |
| PTA in Dicarboxylic Acid Structural unit | 100 | 100 | 100 |
| Intrinsic viscosity, dl/g | 0.64 | 0.54 | 0.61 |

**[Table 3]**

| | Example 1 | Example 2 | Comparative Example 1 | Comparative Example 2 |
|---|---|---|---|---|
| Polyester Resin Added | C1 | C2 | | - |
| Ester Compound (A) | A1 | A2 | A3 | - |
| Amount Added, g | 152.4 | 138.1 | 134.8 | - |
| Ester Compound (B) | B1 | B2 | B3 | B4 |
| Amount Added, g | 391 | 351.3 | 341.7 | 258.4 |
| GeO₂, g | 0.0379 | - | - | 0.0296 |
| Sb₂O₃, g | - | 0.0443 | 0.0455 | - |
| TBT, g | - | 0.0207 | 0.0213 | 0.0385 |
| TEP, g | 0.0924 | 0.1463 | 0.1478 | 0.2035 |
| AcOK, g | 0.0284 | 0.0319 | 0.0322 | 0.0444 |
| (AcO)₂Co, g | 0.0135 | 0.0135 | 0.0135 | 0.021 |
| EG for Depolymerization, g | - | - | - | 211.3 |
| SPG, g | - | - | - | 85.8 |
| Evaluation of Polyester Resin | | | | |
| Composition, % by mol | | | | |
| SPG in Diol Structural unit | 12 | 10.6 | 8 | 10.8 |
| DEG in Diol Structural unit | 3 | 3 | 5.7 | 4 |
| Terephthalic Acid Unit in Dicarboxylic Acid Structural unit | 81.5 | 100 | 100 | 100 |
| Intrinsic viscosity, dl/g | 0.53 | 0.67 | 0.67 | 0.65 |
| Number-Average Molecular Weight (Mn) | 6300 | 8300 | 7700 | 8200 |
| Molecular Weight Polydispersity Index (Mw/Mn) | 3.11 | 3.22 | 3.48 | 3.16 |
| Half-Crystallization Time, sec | >7200 | 1200 | 800 | 300 |

In Tables 1 to 3, the following abbreviated names were used.
- PTA: high-purity terephthalic acid
- DMT: dimethyl terephthalate
- NDCM: dimethyl naphthalenedicarboxylate
- EG: ethylene glycol
- SPG: 3,9-bis(1,1-dimethyl-2-hydroxyethyl)-2,4,8,10-tetraoxaspiro[5.5]undecane
- DEG: diethylene glycol
- TBT: tetrabutoxytitanium
- GeO₂: germanium dioxide
- TEP: triethyl phosphate
- AcOK: potassium acetate
- (AcO)₂Co: cobalt acetate
- G/A: a molar ratio of a diol structural unit to a dicarboxylic acid structural unit

The present application is based on Japanese Patent Application (Japanese Patent Application No. 2014-147701), filed on July 18, 2014, the content of which is hereby incorporated by reference into this application.

## Claims

1. A method for producing a polyester resin that comprises a dicarboxylic acid structural unit and a diol structural unit, the diol structural unit comprising a diol structural unit having a cyclic acetal skeleton, the method comprising
a step of mixing and reacting an ester compound (A) having a cyclic acetal skeleton and an ester compound (B) having no cyclic acetal skeleton,
wherein the method satisfies the following conditions (1) and (2):
(1) the ester compound (A) comprises a dicarboxylic acid structural unit and a diol structural unit, the diol structural unit comprising a diol structural unit having a cyclic acetal skeleton, and has an intrinsic viscosity of 0.1 to 1.5 dl/g as measured at 25°C in a mixed solution of phenol and 1,1,2,2-tetrachloroethane having a mass ratio of 6 : 4; and
(2) the ester compound (B) comprises a dicarboxylic acid structural unit having no cyclic acetal skeleton and a diol structural unit having no cyclic acetal skeleton, and has an acid value of 1 micro equivalent/g or higher and lower than 150 micro equivalents/g.

2. The method for producing the polyester resin according to claim 1, wherein the diol structural unit having a cyclic acetal skeleton comprised in the ester compound (A) is a diol structural unit derived from a compound represented by the general formula (a) or the general formula (b): 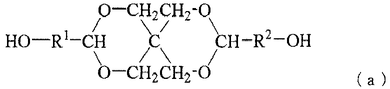 wherein R¹ and R² each independently represent a hydrocarbon group selected from the group consisting of divalent aliphatic hydrocarbon groups having 1 to 10 carbon atoms, divalent alicyclic hydrocarbon groups having 3 to 10 carbon atoms and divalent aromatic hydrocarbon groups having 6 to 10 carbon atoms, or 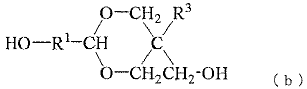 wherein R¹ is the same as above; and R³ represents a hydrocarbon group selected from the group consisting of monovalent aliphatic hydrocarbon groups having 1 to 10 carbon atoms, monovalent alicyclic hydrocarbon groups having 3 to 10 carbon atoms and monovalent aromatic hydrocarbon groups having 6 to 10 carbon atoms.

3. The method for producing the polyester resin according to claim 1 or 2, wherein the diol structural unit having a cyclic acetal skeleton comprised in the ester compound (A) is a diol structural unit derived from 3,9-bis(1,1-dimethyl-2-hydroxyethyl)-2,4,8,10-tetraoxaspiro[5.5]undecane or 5-methylol-5-ethyl-2-(1,1-dimethyl-2-hydroxyethyl)-1,3-dioxane.

4. The method for producing the polyester resin according to any one of claims 1 to 3, wherein 2 to 80% by mol of all the diol structural units comprised in the ester compound (A) is the diol structural unit having a cyclic acetal skeleton.

5. The method for producing the polyester resin according to any one of claims 1 to 4, wherein 1 to 40% by mol of all the diol structural units comprised in the polyester resin is the diol structural unit having a cyclic acetal skeleton.
